(19) Europäisches Patentamt
European Patent Office
Office européen des brevets

(11) **EP 4 425 687 A1**

(12) **EUROPEAN PATENT APPLICATION**
published in accordance with Art. 153(4) EPC

(43) Date of publication:
**04.09.2024 Bulletin 2024/36**

(21) Application number: **22939043.0**

(22) Date of filing: **28.04.2022**

(51) International Patent Classification (IPC):
***H01M 50/533*** (2021.01)

(52) Cooperative Patent Classification (CPC):
**H01M 50/533; Y02E 60/10; Y02P 70/50**

(86) International application number:
**PCT/CN2022/089731**

(87) International publication number:
**WO 2023/206191 (02.11.2023 Gazette 2023/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde, Fujian 352100 (CN)**

(72) Inventors:
• **CHAI, Zhisheng
Ningde, Fujian 352100 (CN)**
• **JIN, Haizu
Ningde, Fujian 352100 (CN)**
• **CHI, Qingkui
Ningde, Fujian 352100 (CN)**

(74) Representative: **Gong, Jinping
CocreateIP
Neumarkterstr. 21
81673 München (DE)**

(54) **ELECTRODE ASSEMBLY, BATTERY CELL, BATTERY, AND ELECTRIC DEVICE**

(57) An electrode assembly, a battery cell, a battery, and an electric device are provided. The electrode assembly includes a first electrode plate (10A), a second electrode plate (10B), and a separator (10C) disposed between the first electrode plate (10A) and the second electrode plate (10B). The first electrode plate (10A), the separator (10C), and the second electrode plate (10B) are wound in a winding direction (r) to form a wound structure (100), where at least one of the first electrode plate (10A) and the second electrode plate (10B) includes: a current collector substrate (11A or 11B); an active substance layer (12A or 12B), disposed on at least one surface on a side, adjacent to the separator (10C), of the current collector substrate (11A or 11B); and a tab set (13A or 13B), connected to a side edge of the current collector substrate (11A or 11B) that extends in the winding direction (r), where the tab set (13A or 13B) includes a plurality of tabs spaced apart in the winding direction (r).

FIG. 4

## Description

## TECHNICAL FIELD

This disclosure relates to the field of battery technologies, and in particular, to an electrode assembly, a battery cell, a battery, and an electric device.

## BACKGROUND

A rechargeable battery cell, also referred to as a secondary battery cell, is a battery cell whose active substance can be activated for reuse through charging after being discharged. Rechargeable battery cells are widely used in electronic devices such as mobile phones, notebook computers, electric bicycles, electric vehicles, electric airplanes, electric ships, electric toy cars, electric toy ships, electric toy airplanes, and electric tools.

As a key component forming the battery cell, the electrode assembly causes some battery performance or safety problems related to tabs during formation of the electrode assembly.

## SUMMARY

According to an aspect of this disclosure, an electrode assembly is provided, including a first electrode plate, a second electrode plate, and a separator disposed between the first electrode plate and the second electrode plate. The first electrode plate, the separator, and the second electrode plate are wound in a winding direction to form a wound structure, where at least one of the first electrode plate and the second electrode plate includes: a current collector substrate; an active substance layer, disposed on at least one surface on a side, adjacent to the separator, of the current collector substrate; and a tab set, connected to a side edge of the current collector substrate that extends in the winding direction, where the tab set includes a plurality of tabs spaced apart in the winding direction.

The plurality of tabs are spaced apart on the side edge of the electrode plate that extends in the winding direction, so that wrinkles on an end portion of the wound structure can be reduced during flattening and welding of the tabs, thereby resolving, to maximum extent, problems such as a rupture or damage of the tabs caused by wrinkles of the tabs, and damage or a short circuit of the electrode plate caused when the wrinkles of the tabs bulge out and penetrate into the electrode plate layer.

In some embodiments, a distance L from an initial coverage position of the active substance layer on the current collector substrate in the winding direction to a first tab in the tab set in the winding direction satisfies:

$$L = K1 \times \sqrt[3]{\frac{C \times p \times t}{W1 \times \rho}};$$

where C is a specific heat capacity of the current collector substrate, p is a density of the current collector substrate, t is a thickness of the current collector substrate, W1 is a width of the current collector substrate, $\rho$ is a resistivity of the current collector substrate, and K1 is a first ratio parameter.

An appropriate value of the distance L from an initial coverage position of the active substance layer on the electrode plate to the first tab is determined based on the specific heat capacity C, density p, thickness t, width W1, and resistivity $\rho$ of the foregoing current collector substrate. This can satisfy the requirements for the current capacity and temperature rise of the tab as well as internal resistance and power performance of the electrode assembly while reducing wrinkles on the tab.

In some embodiments, the first ratio parameter K1 is less than or equal to $1600\text{mm}^{\frac{7}{3}} \cdot \left(\frac{°\text{C} \cdot \Omega}{J}\right)^{\frac{1}{3}}$, the specific heat capacity C of the current collector substrate is measured in J/(g·°C), the density p of the current collector substrate is measured in g/mm³, the thickness t of the current collector substrate is measured in mm, the width W1 of the current collector substrate is measured in mm, and the resistivity $\rho$ of the current collector substrate is measured in $\Omega$·mm.

A value range of the first ratio parameter K1 is limited, so that a battery using the electrode assembly can have a small internal resistance. In this case, a temperature of the tab is within an allowable range during charging, thereby avoiding, to maximum extent, affecting performance of a chemical substance in the battery using the electrode assembly when the tab is overheated.

In some embodiments, the first ratio parameter K1 is less than or equal to $1400\text{mm}^{\frac{7}{3}} \cdot \left(\frac{°\text{C} \cdot \Omega}{J}\right)^{\frac{1}{3}}.$

An optional range of the first ratio parameter K1 is further limited, so that a small internal resistance can be ensured for the battery using the electrode assembly. The temperature of the tab is within an allowable range during charging, avoiding tab overheat and ensuring the performance of the chemical substance in the battery using the electrode assembly.

In some embodiments, the wound structure is a cylindrical wound structure and a width W2 of the tab satisfies:

$$W2 = K2 * \pi * D1;$$

where D1 is a circumferential diameter of an electrode plate layer in the cylindrical wound structure that corresponds to the first tab in the tab set in the winding direction, and K2 is a second ratio parameter.

An appropriate value of the width W2 of the tab is determined based on the circumferential diameter D1 of the electrode plate layer corresponding to the innermost first tab. This can reduce the possibility of tab wrinkling during the flattening process of the tab, thereby avoiding a problem such as a rupture of the tab caused by the wrinkles, or a short circuit caused when the wrinkles of the tab extend downwards to the electrode plate.

In some embodiments, the second ratio parameter K2 is less than or equal to 1/4. The possibility of wrinkling during tab flattening can be lowered to the maximum extent by limiting a value range of the second ratio parameter K2.

In some embodiments, the second ratio parameter K2 is less than or equal to 1/6. Further limiting an optional range of the second ratio parameter K2 can effectively prevent wrinkling during tab flattening.

In some embodiments, the wound structure is a cylindrical wound structure, and the electrode assembly further includes a current collection plate, located on a side of the cylindrical wound structure connected to the tab set, and fixedly connected to a flattened tab set through welding. A height h of the tab satisfies:

$$h=(K3*(d1*t2))/t1;$$

where d1 is a radial distance between tabs respectively connected to electrode plates on adjacent layers in the cylindrical wound structure, t1 is a thickness of the tab, t2 is a thickness of a welding region of the current collection plate, and K3 is a third ratio parameter.

The height of the tab is determined based on the radial distance d1 between tabs on adjacent layers, the thickness t1 of the tab and the thickness t2 of the welding region of the current collection plate. This can reduce the possibility of welding through the tab while satisfying the current capacity of the tab.

In some embodiments, the third ratio parameter K3 is greater than or equal to 0.25. A value range of the third ratio parameter K3 is further limited. This can lower, to the maximum extent, the possibility of welding through the tab while satisfying the current capacity of the tab.

In some embodiments, the third ratio parameter K3 is greater than or equal to 0.28. An optional range of the third ratio parameter K3 is further limited. This can effectively prevent the tab from being welded through while satisfying the current capacity of the tab.

In some embodiments, the wound structure is a cylindrical wound structure, and a distance d2 between top ends of adjacent tabs in the tab set satisfies:

$$d2=(K4*(W2*h))/(D0-2*h);$$

where W2 is the width of the tab, h is the height of the tab, D0 is a circumferential diameter of the outermost electrode plate layer of the cylindrical wound structure, and K4 is a fourth ratio parameter.

The distance d2 between the top ends of adjacent tabs is determined based on the width W2 of the tab, the height h of the tab, and the circumferential diameter D0 of the outermost electrode plate layer. This can reduce the possibility of welding through the tab.

In some embodiments, the fourth ratio parameter K4 is less than or equal to 4. The possibility of welding through the tab can be lowered to maximum extent by limiting the value range of the fourth ratio parameter K4.

In some embodiments, the fourth ratio parameter K4 is less than or equal to 3.2. Further limiting an optional range of the fourth ratio parameter K4 can effectively prevent the tab from being welded through.

In some embodiments, the electrode assembly further includes a current collection plate, located on a side of the cylindrical wound structure connected to the tab set, and fixedly connected to a flattened tab set through welding. A distance S between a root portion of the tab and a side edge of the separator that is adjacent to a side of the tab satisfies:

$$S=K5*t2;$$

where t2 is the thickness of the welding region of the current collection plate, and K5 is a fifth ratio parameter.

The distance S between the root portion of the tab and the side edge of the separator is determined based on the thickness t2 of the welding region of the current collection plate. This can reduce the possibility of burning the separator during welding of the current collection plate, thereby reducing the risk of a short circuit caused by burning.

In some embodiments, the fifth ratio parameter K5 is greater than or equal to 1.5. A value range of the fifth ratio parameter K5 is limited. This lowers, to the maximum extent, the possibility of burning the separator during welding of the current collection plate, thereby reducing the risk of a short circuit caused by burning of the separator.

In some embodiments, the fifth ratio parameter K5 is greater than or equal to 3. Further limiting an optional range of the fifth ratio parameter K5 can effectively prevent the separator from being burned during welding of the current collection plate.

In some embodiments, the first electrode plate and the second electrode plate both include the tab set, and the tab set included in the first electrode plate and the tab set included in the second electrode plate are separately located at different ends of the wound structure in a direction perpendicular to the winding direction.

The tab set is disposed on each of the first electrode plate and the second electrode plate that are wound, and the two tab sets are separately disposed at different ends of the wound structure, so that wrinkles of the electrode plates at the two ends of the wound structure can be reduced during flattening and welding of the tabs, thereby resolving, to maximum extent, problems such as a rupture or damage of the tabs caused by wrinkles of the tabs, and damage or a short circuit of the electrode plate caused when the wrinkles of the tabs bulge out and penetrate into the electrode plate layer.

According to an aspect of this disclosure, a battery cell is provided, including the foregoing electrode assembly.

The battery cell using the electrode assembly in the foregoing embodiment can have better performance.

According to an aspect of this disclosure, a battery is provided, including the foregoing battery cell.

The battery using the battery cell in the foregoing embodiment can have better performance.

According to an aspect of this disclosure, an electric device is provided, including the foregoing battery.

The electric device using the battery in the foregoing embodiment can have better performance.

## BRIEF DESCRIPTION OF DRAWINGS

To describe the technical solutions in the embodiments of this disclosure more clearly, the following briefly describes the accompanying drawings required for describing the embodiments of this disclosure. Apparently, the accompanying drawings described below show merely some embodiments of this disclosure, and a person of ordinary skill in the art may still derive other drawings from the accompanying drawings without creative efforts.

With reference to the accompanying drawings, this disclosure can be more clearly understood based on the following detailed descriptions.

FIG. 1 is a schematic structural diagram of an electric device according to some embodiments of this disclosure;

FIG. 2A is a schematic structural diagram of a battery according to some embodiments of this disclosure;

FIG. 2B is a schematic structural diagram of a plurality of electrically connected battery cells of a battery according to some embodiments of this disclosure;

FIG. 3 is a schematic cross-sectional view of a wound structure of an electrode assembly according to some embodiments of this disclosure;

FIG. 4 is a schematic structural diagram of an electrode assembly according to some embodiments of this disclosure;

FIG. 5 is a schematic diagram of an unfolded electrode plate of an electrode assembly according to some embodiments of this disclosure;

FIG. 6 is a schematic diagram of an arrangement of a first electrode plate, a second electrode plate, and a separator of an electrode assembly according to some embodiments of this disclosure; and

FIG. 7 is a schematic structural diagram of an electrode assembly according to some other embodiments of this disclosure.

It should be understood that sizes of various parts shown in the accompanying drawings are not drawn to scale. In addition, the same or similar reference signs indicate the same or similar components.

Reference signs:

10: battery cell; 10A: first electrode plate; 10B: second electrode plate; 10C: separator; 100: wound structure; 11A and 11B: current collector substrate; 12A and 12B: active substance layer; 13A and 13B: tab set;
20: current collection plate; 21: welding region; 22: electrode terminal; 23: busbar;
30: battery; 31: box; 32: cover; and
40: vehicle.

## DESCRIPTION OF EMBODIMENTS

The following further describes the embodiments of this disclosure in detail with reference to the accompanying drawings and embodiments. The detailed description and accompanying drawings of the following embodiments are used to exemplarily illustrate the principle of this disclosure, but are not intended to limit the scope of this disclosure, that is, this disclosure is not limited to the described embodiments.

In the descriptions of this disclosure, it should be noted that, unless otherwise stated, "a plurality of" means two or more; and the orientations or positional relationships indicated by the terms "upper", "lower", "left", "right", "inside", "outside", and the like are merely intended to help the descriptions of this disclosure and simplify the descriptions other than indicate or imply that the apparatuses or components must have specific orientations, or be constructed and manipulated with specific orientations, and therefore shall not be construed as limitations on this disclosure. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The words of orientation appearing in the following description are all directions shown in the drawings, and do not limit the specific structure of this disclosure. In the descriptions of this disclosure, it should be also noted that unless otherwise specified and defined explicitly, the terms "installing", "coupling", and "connecting" should be understood in a broad sense. For example, these terms may refer to fixed connections, or detachable connections, or integral connections, and they may refer to direct connections, or indirect connections through an intermediate medium. A person of ordinary skills in the art may understand specific meanings of the foregoing terms in this disclosure as appropriate to specific situations.

The following describes in detail some embodiments of the present invention with reference to the accompanying drawings. In absence of conflicts, features in the following embodiments may be combined.

In some related technologies, an electrode assembly of a cylindrical battery cell has a long tab extending outwardly relative to an end of the wound structure, and the long tab extends continuously in a length direction of the electrode plate. Before the long tab is welded to the current collection plate, the entire tab needs to be bent and flattened to form a structure in which the tab is overlapped layer by layer from the outside to the inside. The inventors have found through research that such a long tab has a certain curvature along with the winding of the electrode plate, and tends to wrinkle when the bent long tab is flattened. A wrinkled tab is prone to rupture and may easily cause a short circuit risk for the electrode plate when a wrinkle penetrates into the electrode plate. As a result, the safety performance of the battery is affected.

In view of this, embodiments of this disclosure provide an electrode assembly, a battery cell, a battery, and an electric device, so that the safety performance of the battery can be improved.

The electrode assembly in this embodiment of this disclosure can be applied to various types of battery cells. A battery cell may include a lithium-ion secondary battery, a lithium-ion primary battery, a lithium-sulfur battery, a sodium/lithium-ion battery, a sodium-ion battery, a magnesium-ion battery, and the like, which is not limited in this embodiment of this disclosure. The battery cell may be cylindrical, flat, or cuboid, or of other shapes, which is not limited in this embodiment of this application either. Battery cells are typically divided into a cylindrical cell, a prismatic cell, and a pouch cell by packaging methods, which is not limited in the embodiments of this application either.

The battery cell in this embodiment of this disclosure can be applied to varies types of batteries. The battery can be used to supply power for a vehicle and other electric devices, for example, to supply power for operating or driving the vehicle. The battery may include a housing and a battery module, where the housing is used to provide a space for accommodating the battery module, and the battery module is mounted inside the housing. The housing may be made of metal. The battery module may include a plurality of battery cells connected in series, parallel, or series-parallel. A battery cell is the smallest unit forming a battery. The battery cell includes an electrode assembly in which an electrochemical reaction can occur.

The battery in this embodiment of this disclosure may be applied to various types of electric devices using batteries. The electric device may be a mobile phone, a portable device, a notebook computer, an electric bicycle, an electric vehicle, a steamship, a spacecraft, an electric toy, an electric tool, or the like. For example, the spacecraft includes an airplane, a rocket, a space shuttle, a spaceship, or the like. The electric toy includes a fixed or mobile electric toy, such as a game console, an electric vehicle toy, an electric ship toy, and an electric airplane toy. The electric tool includes an electric metal cutting tool, an electric grinding tool, an electric assembly tool, and an electric railway-specific tool, such as an electric drill, an electric grinder, an electric wrench, an electric screwdriver, an electric hammer, an electric impact drill, a concrete vibrator, and an electric planer. The foregoing electric device is not specifically limited in embodiments of this invention.

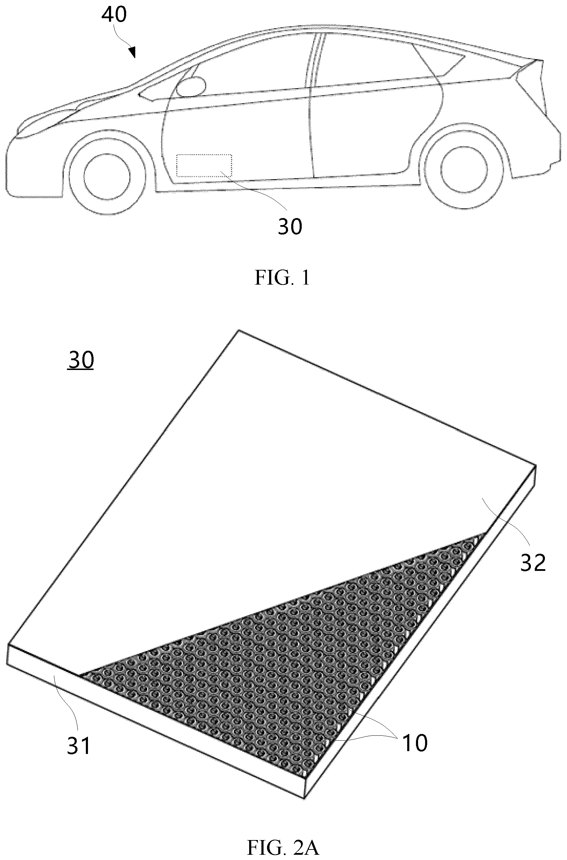

FIG. 1 is a schematic structural diagram of an electric device according to some embodiments of this disclosure. For purpose of convenience, the electric device is used as an example for description. Referring to FIG. 1, a battery 30 is disposed inside a vehicle 40, and the battery 30 is located at the bottom, front, or rear of the vehicle. The battery 30 supplies power for the vehicle. For example, the battery 30 is used as a power supply for operation of the vehicle. The battery 30 may be used as a power supply for a new energy vehicle, a ship, a smart electrical cabinet, or other apparatuses. The battery 30 may also be used as a power supply part to provide the required electric power for various electrical components of an apparatus.

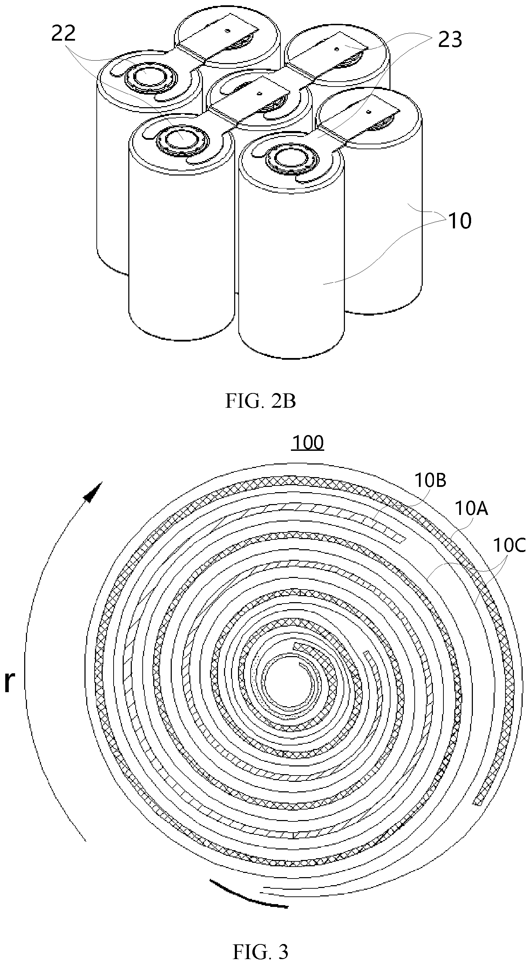

FIG. 2A is a schematic structural diagram of a battery according to some embodiments of this disclosure. FIG. 2B is a schematic structural diagram of a plurality of electrically connected battery cells of a battery according to some embodiments of this disclosure. Referring to FIG. 2A, in some embodiments, the battery 30 includes a box 31, a cover 32, and one or more battery cells 10 provided in the box 31. For ease of observing the plurality of battery cells 10 inside the box 31, FIG. 2A only shows a part of the cover 32. Referring to FIG. 2B, the battery cells 10 are electrically connected to each other, for example, in series, parallel, or series-parallel, to implement the desired electrical performance parameters of the battery 30. A plurality of battery cells 10 are arranged in rows, and one or more rows of battery cells 10 may be provided in the box as needed.

In some embodiments, all battery cells 10 of the battery 30 may be arranged in at least one of a length direction and a width direction of the box. At least one row or column of battery cells 10 may be provided based on actual needs. When needed, one or more layers of battery cells 10 may also be arranged in a height direction of the battery 30.

In some embodiments, a plurality of battery cells 10 may be first connected in series, or parallel, or series-parallel to form a battery module, and then a plurality of battery modules are connected in series, or parallel, or series-parallel to form an entity and accommodated in the box 31. In some other embodiments, all battery cells 10 are directly connected in series, or parallel, or series-parallel, and then the entity formed by all the battery cells 10 is accommodated in the box. In FIG. 2B, an electrode terminal 22 of a battery cell 10 is electrically connected to an adjacent battery cell 10 via a busbar (Busbar) 23.

The battery cell 10 may include a housing, an end cover, and an electrode assembly. The housing has a cavity for accommodating the electrode assembly, and an end portion of the housing may be opened to arrange an end cover assembly. The electrode assembly is accommodated in the cavity of the housing. In addition to the electrode assembly, the end cover, and the housing, the battery cell 10 further includes an electrolyte.

FIG. 3 is a schematic cross-sectional view of a wound structure of an electrode assembly according to some embodiments of this disclosure. Referring to FIG. 3, in some embodiments, the electrode assembly includes a first electrode plate 10A, a second electrode plate 10B, and a separator 10C disposed between the first electrode plate 10A and the second electrode plate 10B. The first electrode plate 10A, the separator 10C, and the second electrode plate 10B are wound in a winding direction r to form a wound structure 100, for example a stacking structure of the second electrode plate 10B, the separator 10C, the first electrode plate 10A, the separator 10C... formed in a radial direction of the winding mechanism 100 shown in FIG. 3. The first electrode plate 10A may be a negative electrode plate or a positive electrode plate, and the second electrode plate 10B is a positive electrode plate or a negative electrode plate whose polarity is opposite to that of the first electrode plate 10A. The wound structure 100 may form a cylindrical wound structure after winding. Accordingly, the housing used for the battery cell including the electrode assembly is a cylindrical housing structure.

The battery cell 10 mainly works relying on migration of metal ions between the positive electrode plate and the negative electrode plate. A material of the separator 10C may be PP (polypropylene, polypropylene), PE (polyethylene, polyethylene), or the like.

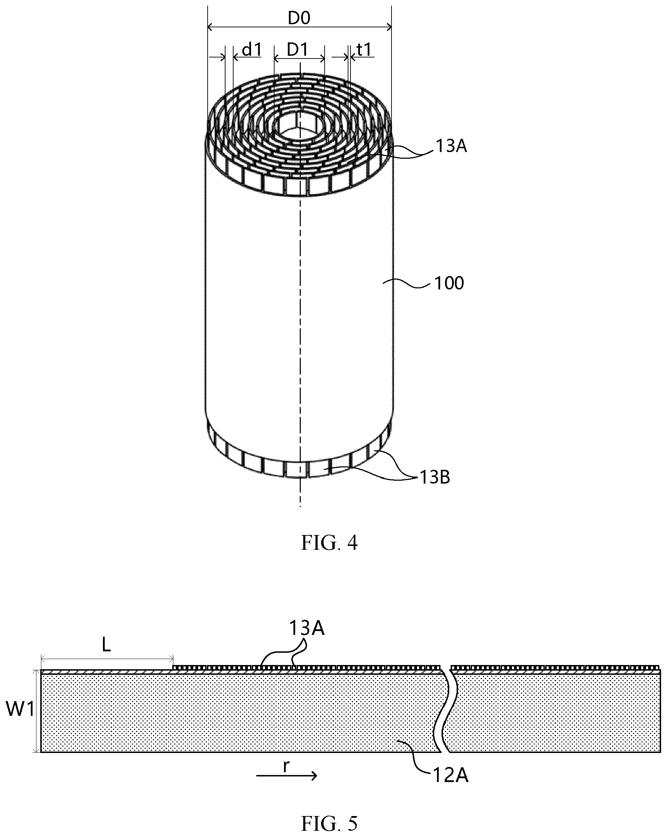

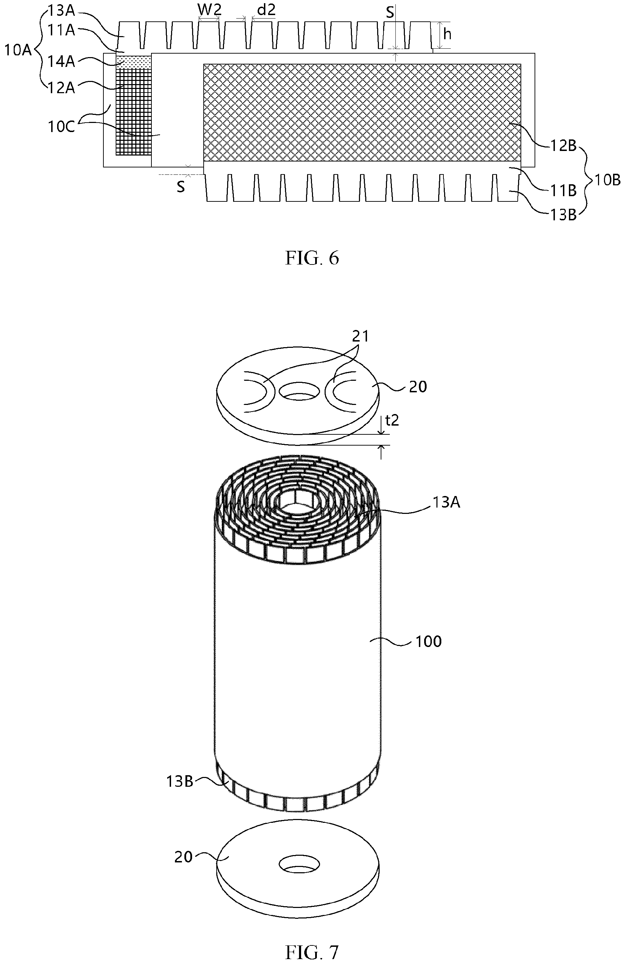

FIG. 4 is a schematic structural diagram of an electrode assembly according to some embodiments of this disclosure. FIG. 5 is a schematic diagram of an unfolded electrode plate of an electrode assembly according to some embodiments of this disclosure. FIG. 6 is a schematic diagram of an arrangement of a first electrode plate, a second electrode plate, and a separator of an electrode assembly according to some embodiments of this disclosure.

Referring to FIG. 4 to FIG. 6, in some embodiments, at least one of the first electrode plate 10A and the second electrode plate 10B includes a current collector substrate, an active substance layer, and a tab set. For example, in FIG. 5 and FIG. 6, the first electrode plate 10A includes a current collector substrate 11A, an active substance layer 12A, and a tab set 13A. The active substance layer 12A is disposed on at least one surface on a side, adjacent to the separator 10C, of the current collector substrate 11A. In FIG. 6, the second electrode plate 10B includes a current collector substrate 11B, an active substance layer 12B, and a tab set 13B. The active substance layer 12B is disposed on at least one surface on a side, adjacent to the separator 10C, of the current collector substrate 11B.

For example, the first electrode plate 10A is a negative electrode plate. The negative electrode plate includes the current collector substrate 11A (namely, a negative electrode current collector substrate), the active substance layer 12A (namely, a negative electrode active substance layer), and the tab set 13A (namely, a negative electrode tab set). The active substance layer 12A is applied on a surface of the current collector substrate 11A. The negative electrode plate may further include an insulation layer 14A (for example, a ceramic insulation layer) that covers the surface of the current collector substrate 11A and is located on a side of the active substance layer 12A adjacent to the tab set 13. The insulation layer 14A can prevent burrs on a cut edge of an anode electrode plate from piercing through the separator and short-circuiting with a cathode electrode plate.

The tab set 13A is connected to a side edge of the current collector substrate 11A that extends in the winding direction r. The tab set 13A may include a plurality of tabs spaced apart in the winding direction r. A negative electrode current collector may be made of copper, and a negative electrode active substance layer may be carbon, silicon, or the like. In some embodiments, the tab set 13A may be welded to the side edge of the current collector substrate 11A. The tab set 13A may alternatively be formed by die-cutting of the current collector substrate 11A.

For example, the second electrode plate 10B is a positive electrode plate. The positive electrode plate includes the current collector substrate 11B (namely, a positive electrode current collector substrate), the active substance layer 12B (namely, a positive electrode active substance layer), and the tab set 13B (namely, a positive electrode tab set). The active substance layer 12B is applied on a surface of the current collector substrate 11B.

The tab set 13B is connected to a side edge of the current collector substrate 11B that extends in the winding direction r. The tab set 13B may include a plurality of tabs spaced apart in the winding direction r. Using the lithium-ion battery as an example, the positive electrode current collector substrate may be made of aluminum and the positive electrode active substance layer may be lithium cobaltate, lithium iron phosphate, ternary lithium, lithium manganate, or the like. In some embodiments, the tab set 13B may be welded to the side edge of the current collector substrate 11B. The tab set 13B may alternatively be formed by die-cutting of the current collector substrate 11B.

Referring to FIG. 4 to FIG. 6, the tab set 13A or 13B includes a plurality of tabs spaced apart in the winding direction r. These tabs may be formed by using a process such as die-cutting. The plurality of tabs are spaced apart on the side edge of the electrode plate that extends in the winding direction, so that wrinkles on an end portion of the wound structure can be reduced during flattening and welding of the tabs, thereby resolving, to maximum extent, problems such as a rupture or damage of the tabs caused by wrinkles of the tabs, and damage or a short circuit of the electrode plate caused when the wrinkles of the tabs bulge out and penetrate into the electrode plate layer.

In FIG. 4 to FIG. 6, the tab set 13A included in the first electrode plate 10A and the tab set 13B included in the second electrode plate 10B are located at different ends of the wound structure 100 in a direction perpendicular to the winding direction r. This can reduce wrinkles on the electrode plates at the two ends of the wound structure during flattening and welding of the tabs, thereby resolving, to maximum extent, problems such as a rupture or damage of the tabs caused by wrinkles of the tabs, and damage or a short circuit of the electrode plate caused when the wrinkles of the tabs bulge out and penetrate into the electrode plate layer.

Referring to FIG. 4 to FIG. 6, in some embodiments, a distance L from an initial coverage position of the active substance layer 12A (or 12B) on the current collector substrate 11A (or 11B) in the winding direction r to a first tab in the tab set 13A (or 13B) in the winding direction r satisfies:

$$L = K1 \times \sqrt[3]{\frac{C \times p \times t}{W1 \times \rho}};$$

where C is a specific heat capacity of the current collector substrate, p is a density of the current collector substrate, t is a thickness of the current collector substrate, W1 is a width of the current collector substrate, $\rho$ is a resistivity of the current collector substrate, and K1 is a first ratio parameter.

When a tab set including a plurality of tabs spaced apart is used, a total size of a tab in the length direction of the electrode plate is generally less than a length of a part of the electrode plate covered by the active substance layer. In this case, the current capacity of the tab needs to be considered when charges on the electrode plate flow in and out through the tab. When the current capacity of the tab is exceeded, overcurrent of the tab causes the tab to be heated and causes the temperature to exceed an allowable temperature range, thereby affecting the performance of the chemical substance in the battery using the electrode assembly.

The distance L from the initial coverage position of the active substance layer on the electrode plate to the first tab reflects a proportional relationship between the tab set and the entire length of the electrode plate.

Furthermore, the first tab is distributed with larger current compared with other tabs and therefore is more susceptible to overcurrent. The thickness t of the current collector substrate can affect the current capacity of the tab, the resistivity $\rho$, density p, and specific heat capacity C of the current collector substrate can affect the temperature rise of the tab, and the width W1 of the current collector substrate can affect the current density at the tab.

When the thickness t of the current collector substrate is inadequate, the current capacity of the tab decreases. When the density p and specific heat capacity C of the current collector substrate are low, the temperature of the tab rises fast during heating and easily exceeds the allowable range. When the resistivity $\rho$ of the current collector substrate is excessively high, more internal energy is generated, increasing the temperature of the tab. When the width W1 of the current collector substrate is excessively great, the amount of charges gathered at the tab increases, resulting in a higher current density.

Therefore, an appropriate value of the distance L from an initial coverage position of the active substance layer on the electrode plate to the first tab is determined based on the specific heat capacity C, density p, thickness t, width W1, and resistivity $\rho$ of the foregoing current collector substrate. This can satisfy the requirements for the current capacity and temperature rise of the tab as well as internal resistance and power performance of the electrode assembly while reducing wrinkles on the tab.

In some embodiments, the first ratio parameter K1 is less than or equal to $2000\mathrm{mm}^{\frac{7}{3}} \cdot \left(\frac{°C \cdot \Omega}{J}\right)^{\frac{1}{3}}$, the specific heat capacity C of the current collector substrate is measured in J/(g·°C), the density p of the current collector substrate is measured in g/mm$^3$, the thickness t of the current collector substrate is measured in mm, the width W1 of the current collector substrate is measured in mm, and the resistivity $\rho$ of the current collector substrate is measured in $\Omega$·mm.

A value range of the first ratio parameter K1 is limited, so that a battery using the electrode assembly can have a small internal resistance. In this case, a temperature of the tab is within an allowable range during charging, thereby avoiding, to maximum extent, affecting performance of a chemical substance in the battery using the electrode assembly when the tab is overheated.

Optionally, the first ratio parameter K1 is less than or equal to $1600\mathrm{mm}^{\frac{7}{3}} \cdot \left(\frac{°C \cdot \Omega}{J}\right)^{\frac{1}{3}}$. An optional range of the first ratio parameter K1 is further limited, so that a small internal resistance can be ensured for the battery using the electrode assembly. The temperature of the tab is within an allowable range during charging, avoiding tab overheat and ensuring the performance of the chemical substance in the battery using the electrode assembly.

With reference to the foregoing embodiment, in an experimental example, the electrode assembly was applied to a 32 Ah battery, the thickness t of the current collector substrate was 0.012 mm, the resistivity $\rho$ of the current collector substrate was 0.0000285$\Omega$·mm, the width W1 of the current collector substrate was 68.5 mm, the specific heat capacity C of the current collector substrate was 0.88 J/(g·°C), and the density p of the current collector substrate was 0.0027 g/mm³. When calculation

$$K1 = 1600 \text{ mm}^{\frac{7}{3}} \cdot \left(\frac{°C \cdot \Omega}{J}\right)^{\frac{1}{3}}$$

was performed based on , the distance L was approximately equal to 391 mm; or when calculation was performed based on

$$K1 = 2000 \text{mm}^{\frac{7}{3}} \cdot \left(\frac{°C \cdot \Omega}{J}\right)^{\frac{1}{3}}$$

, the distance L was approximately equal to 489 mm. Therefore, when the actual distance L is 340 mm, which is less than 391 mm and 489 mm, corresponding K1 is less than $1600 \text{mm}^{\frac{7}{3}} \cdot \left(\frac{°C \cdot \Omega}{J}\right)^{\frac{1}{3}}$ , a measured direct-current internal resistance of the battery is 2.8 mohm, satisfying the requirement that the internal resistance of such battery does not exceed 3.1 mohm; and a measured tab temperature is 50°C during fast charging, satisfying the requirement that the tab temperature of such battery does not exceed 60°C.

With reference to the foregoing embodiment, in another experimental example, the electrode assembly was applied to a 32 Ah battery, the thickness t of the current collector substrate was 0.006 mm, the resistivity $\rho$ of the current collector substrate was 0.0000173 Ω mm, the width W1 of the current collector substrate was 68.5 mm, the specific heat capacity C of the current collector substrate was 0.39 J/(g·°C), and the density p of the current collector substrate was 0.0089 g/mm³. When calculation was performed based on

$$K1 = 1600 \text{mm}^{\frac{7}{3}} \cdot \left(\frac{°C \cdot \Omega}{J}\right)^{\frac{1}{3}}$$

, the distance L was approximately equal to 416 mm; or when calculation was performed based on $K1 = 2000 \text{mm}^{\frac{7}{3}} \cdot \left(\frac{°C \cdot \Omega}{J}\right)^{\frac{1}{3}}$ , the distance L was approximately equal to 520 mm. Therefore, when the actual distance L is 350mm, which is less than 416mm and 520mm, corresponding K1 is less than

$$1600 \text{mm}^{\frac{7}{3}} \cdot \left(\frac{°C \cdot \Omega}{J}\right)^{\frac{1}{3}}$$

, a measured direct-current internal resistance of the battery is 2.8 mohm, satisfying the requirement that the internal resistance of such battery does not exceed 3.1 mohm; and a measured tab temperature is 50°C during fast charging, satisfying the requirement that the tab temperature of such battery does not exceed 60°C.

With reference to the foregoing embodiment, in another experimental example, the electrode assembly was applied to a 32 Ah battery, the thickness t of the current collector substrate was 0.015 mm, the resistivity $\rho$ of the current collector substrate is 0.0000285 Ω·mm, the width W1 of the current collector substrate was 68.5 mm, the specific heat capacity C of the current collector substrate was 0.88 J/(g·°C), and the density p of the current collector substrate was 0.0027 g/mm³. When calculation was performed based on

$$K1 = 1600 \text{mm}^{\frac{7}{3}} \cdot \left(\frac{°C \cdot \Omega}{J}\right)^{\frac{1}{3}}$$

, the distance L was approximately 421 mm; and when calculation was performed based on $K1 = 2000 \text{mm}^{\frac{7}{3}} \cdot \left(\frac{°C \cdot \Omega}{J}\right)^{\frac{1}{3}}$ , the distance L was approximately 527 mm. Therefore, when the actual distance L is 380mm, which is less than 421mm and 527mm, corresponding K1 is less than

$$1600 \text{mm}^{\frac{7}{3}} \cdot \left(\frac{°C \cdot \Omega}{J}\right)^{\frac{1}{3}}$$

, a measured direct-current internal resistance of the battery is 2.8 mohm, meeting the requirement that the internal resistance of such battery does not exceed 3.1 mohm, and a measured tab temperature is 49°C during fast charging, meeting the requirement that the tab temperature of such battery does not exceed 60°C.

With reference to the foregoing embodiment, in a comparative experimental example, the electrode assembly was applied to a 32 Ah battery, the thickness t of the current collector substrate was 0.006 mm, the resistivity $\rho$ of the current collector substrate was 0.0000205 Ω mm, the width W1 of the current collector substrate was 68.5 mm, the specific heat capacity C of the current collector substrate was 0.46 J/(g·°C), and the density p of the current collector substrate was 0.0079 g/mm³. When calculation was performed based on

$$K1 = 1600 \text{ mm}^{\frac{7}{3}} \cdot \left(\frac{°C \cdot \Omega}{J}\right)^{\frac{1}{3}}$$

, the distance L was approximately 185 mm; and when calculation was performed based on

$$K1 = 2000 \text{mm}^{\frac{7}{3}} \cdot \left(\frac{°C \cdot \Omega}{J}\right)^{\frac{1}{3}}$$

, the distance L was approximately 231 mm. Therefore, when the actual distance L is 350 mm, which is greater than 185 mm and 231 mm, corresponding K1 is greater than

$$2000\text{mm}^{\frac{7}{3}} \cdot \left(\frac{°\text{C} \cdot \Omega}{J}\right)^{\frac{1}{3}}$$

, a measured direct-current internal resistance of the battery is 4.2 mohm, falling short of the requirement that the internal resistance of such battery does not exceed 3.1 mohm, and a measured tab temperature is 80°C during fast charging, falling short of the requirement that the tab temperature of such battery does not exceed 60°C.

With reference to the foregoing embodiment, in another comparative experimental example, the electrode assembly was applied to a 32 Ah battery, the thickness t of the current collector substrate was 0.008 mm, the resistivity $\rho$ of the current collector substrate was 0.0000285 Q mm, the width W1 of the current collector substrate was 68.5 mm, the specific heat capacity C of the current collector substrate was 0.88 J/(g·°C), and the density p of the current collector substrate was 0.0027 g/mm³. When calculation was performed based on

$$K1 = 1600\text{mm}^{\frac{7}{3}} \cdot \left(\frac{°\text{C} \cdot \Omega}{J}\right)^{\frac{1}{3}}$$

, the distance L was approximately 342 mm; and when calculation was per-

$$K1 = 2000\text{mm}^{\frac{7}{3}} \cdot \left(\frac{°\text{C} \cdot \Omega}{J}\right)^{\frac{1}{3}}$$

formed based on , the distance L was approximately 427 mm. Therefore, when the actual distance L is 500 mm, which is greater than 342 mm and 427 mm, corresponding K1 is greater than

$$2000\text{mm}^{\frac{7}{3}} \cdot \left(\frac{°\text{C} \cdot \Omega}{J}\right)^{\frac{1}{3}}$$

, a measured direct-current internal resistance of the battery is 3.4 mohm, falling short of the requirement that the internal resistance of such battery does not exceed 3.1 mohm, and a measured tab temperature is 65°C during fast charging, falling short of the requirement that the tab temperature of such battery does not exceed 60°C.

As can be known from the foregoing experimental examples and comparative experimental examples, desired internal resistance of the battery and desired tab temperature during fast charging can be obtained by selecting an appropriate distance L. This can avoid a case in which an excessively high internal resistance of the battery causes an increase in internal energy and therefore the power performance of the battery is affected, and avoids a case in which performance of the chemical substance in the battery is affected by an excessively high temperature of the tab, shortening service life of the battery and leading to battery failure.

Referring to FIG. 4 and FIG. 6, in some embodiments, the wound structure 100 is a cylindrical wound structure, and the width W2 of the tab satisfies:

$$W2 = K2 * \pi * D1;$$

where D1 is a circumferential diameter of an electrode plate layer in the cylindrical wound structure that corresponds to the first tab in the tab set 13A (or 13B) in the winding direction r, and K2 is a second ratio parameter.

When the electrode plate is wound into a cylindrical wound structure, tabs present different degrees of curvature along with the curvature change of the electrode plate layers on which the tabs are located. Generally, the tab corresponding to an electrode plate layer closer to the inner roll has a greater degree of curvature, and such tab is more likely to produce wrinkles when being flattened. The possibility of wrinkling a curved tab can be reduced by reducing the width of the tab.

An appropriate value of the width W2 of the tab is determined based on the circumferential diameter D1 of the electrode plate layer corresponding to the innermost first tab. This can reduce the possibility of tab wrinkling during the flattening process of the tab, thereby avoiding a problem such as a rupture of the tab caused by the wrinkles, or a short circuit caused when the wrinkles of the tab extend downwards to the electrode plate.

In some embodiments, the second ratio parameter K2 is less than or equal to 1/4. The possibility of wrinkling during tab flattening can be lowered to the maximum extent by limiting a value range of the second ratio parameter K2. Optionally, the second ratio parameter K2 is less than or equal to 1/6. Further limiting an optional range of the second ratio parameter K2 can effectively prevent wrinkling during tab flattening.

With reference to the foregoing embodiment, in an experimental example, the circumferential diameter D1 was 13.3 mm, and when calculation was performed based on K2=1/4, the width W2 of the tab was approximately equal to 10 mm; or when calculation was performed based on K2=1/6, the width W2 of the tab was approximately equal to 7.0 mm. Therefore, when the actual width W2 is 5.0 mm, which is less than 10 mm and 7.0 mm, corresponding K2 is less than 1/6. In this case, no wrinkle was observed after the tab was flattened.

With reference to the foregoing embodiment, in a comparative experimental example, the circumferential diameter D1 was equal to 13.3 mm; or when calculation was performed based on K2=1/4, the width W2 of the tab was approximately equal to 10 mm; and when calculation was performed based on K2=1/6, the width W2 of the tab was approximately 7.0 mm. Therefore, when the actual width W2 is 12.0 mm, which is greater than 10 mm and 7.0 mm, corresponding K2 is greater than 1/4. In this case, wrinkle was observed after the tab was flattened.

As can be seen from the foregoing experimental examples and comparative experimental examples that the possibility of wrinkling during tab flattening can be effectively reduced by selecting an appropriate width W2. This can avoid short circuit caused by a rupture of the tab or a wrinkle penetrating into the electrode plate as a result of tab wrinkling.

Referring to FIG. 4 and FIG. 6, in some embodiments, the wound structure 100 is a cylindrical wound structure, and a distance d2 between top ends of adjacent tabs in the tab set 13A (or 13B) satisfies:

$$d2=(K4*(W2*h))/(D0-2*h);$$

where W2 is the width of the tab, h is the height of the tab, D0 is a circumferential diameter of the outermost electrode plate layer of the cylindrical wound structure, and K4 is a fourth ratio parameter.

When the electrode plate is wound into a cylindrical wound structure, tabs present different degrees of overlap along with the curvature change of the electrode plate layers on which the tabs are located. Generally, the curvature is greater and more tab overlaps are present for an electrode plate closer to the inner roll, while the curvature is smaller and fewer tab overlaps are present for an electrode plate closer to the outer roll. A tab with fewer overlaps may have insufficient thickness after being flattened, and tends to be welded through during welding, thereby reducing a product yield rate.

In addition, an overlapping degree of the tabs increases as tabs become wider or higher, or a distance between tabs becomes smaller. If the distance between tabs is excessively large, adjacent tabs may overlap less and are excessively thin after being flattened. Therefore, the distance d2 between the top ends of adjacent tabs is determined based on the width W2 of the tab, the height h of the tab, and the circumferential diameter D0 of the outermost electrode plate layer. This can reduce the possibility of welding through the tab and increase the product yield rate.

In some embodiments, the fourth ratio parameter K4 is less than or equal to 4. The possibility of welding through the tab can be lowered to maximum extent by limiting the value range of the fourth ratio parameter K4. Optionally, the fourth ratio parameter K4 is less than or equal to 3.2. Further limiting an optional range of the fourth ratio parameter K4 can effectively prevent the tab from being welded through.

With reference to the foregoing embodiment, in an experimental example, the circumferential diameter D0 was 44.7 mm, the height h of the tab was 5 mm, and the width W2 of the tab was 5. When calculation was performed based on K4=4, the distance d2 was approximately 2.5 mm; and when calculation was performed based on K4=3.2, the distance d2 was approximately 2.0 mm. Therefore, when the actual distance d2 is 1 mm, which is less than 2.5 mm and 2.0 mm, corresponding K4 is less than 3.2. In this case, it was observed that the tab set of each electrode assembly was not welded through after being flattened.

With reference to the foregoing embodiment, in another experimental example, the circumferential diameter D0 was 30 mm, the height h of the tab was 5 mm, and the width W2 of the tab was 5. When calculation was performed based on K4=4, the distance d2 was approximately 4.0 mm; and when calculation was performed based on K4=3.2, the distance d2 was approximately 3.2 mm. Therefore, when the actual distance d2 is 1 mm, which is less than 4.0 mm and 3.2 mm, corresponding K4 is less than 3.2. In this case, it was observed that the tab set of each electrode assembly was not welded through after being flattened.

With reference to the foregoing embodiment, in another experimental example, the circumferential diameter D0 was 60 mm, the height h of the tab was 5 mm, and the width W2 of the tab was 5. When calculation was performed based on K4=4, the distance d2 was approximately 1.8 mm; or when calculation was performed based on K4=3.2, the distance d2 was approximately 1.5 mm. Therefore, when the actual distance d2 is 1 mm, which is less than 1.8 mm and 1.5 mm, corresponding K4 is less than 3.2. In this case, it was observed that the tab set of each electrode assembly was not welded through after being flattened.

With reference to the foregoing embodiment, in a comparative experimental example, the circumferential diameter D0 was 44.7 mm, the height h of the tab was 5 mm, and the width W2 of the tab was 5. When calculation was performed based on K4=4, the distance d2 was approximately 2.5 mm; and when calculation was performed based on K4=3.2, the distance d2 was approximately 2.0 mm. Therefore, when the actual distance d2 is 3 mm, which is greater than 2.5 mm and 2.0 mm, corresponding K4 is greater than 4. In this case, it was observed that the outer layer of approximately 50% of tabs in the tab set of each electrode assembly were welded through after being flattened.

It can be seen from the foregoing experimental examples and comparative experimental examples that the possibility of welding through the tabs during tab flattening can be effectively reduced by selecting an appropriate distance d2, thereby increasing the product yield rate.

FIG. 7 is a schematic structural diagram of an electrode assembly according to some other embodiments of this disclosure. Referring to FIG. 7, in some embodiments, the electrode assembly further includes a current collection plate 20. The current collection plate 20 is located on a side of the cylindrical wound structure connected to the tab set, and fixedly connected to a flattened tab set through welding. For example, in FIG. 7, the wound structure 100 is a cylindrical wound structure, and a tab set 13A and a tab set 13B are disposed on two ends of the wound structure 100 respectively, and are welded to the current collection plate 20 after being flattened. In FIG. 7, reference sign 21 shows a welding region 21 of the current collection plate 20.

Referring to FIG. 4, FIG. 6, and FIG. 7, in some embodiments, a height h of the tab satisfies:

$$h=(K3*(d1*t2))/t1;$$

where d1 is a radial distance between tabs respectively connected to electrode plates on adjacent layers in the cylindrical wound structure, t1 is a thickness of the tab, t2 is a thickness of the welding region of the current collection plate 20, and K3 is a third ratio parameter.

The current collection plate is fixedly connected to the flattened tab through welding. The thickness of the current collection plate determines heat generated during welding, and excessive heat will affect the separator in the electrode assembly. Flattened tabs can have a certain thickness after overlapping. A thicker tab obtained through overlapping is less likely to be welded through and to burn the separator to cause a risk of short circuit.

The radial distance d1 between tabs respectively connected to electrode plates on adjacent layers, the thickness t1 of the tab, and the height h of the tab can affect the overlapping thickness of the flattened tabs. When the radial distance d1 is smaller, the tabs on adjacent layers are closer, and the overlapping thickness is greater. A tab with a greater height h has a larger coverage area after being flattened, thereby increasing a quantity of tabs that overlap and the overlapping thickness. A greater thickness t1 of the tab contributes to a greater thickness of overlapped tabs. Therefore, the height of the tab is determined based on the radial distance d1 between tabs on adjacent layers, the thickness t1 of the tab and the thickness t2 of the welding region of the current collection plate. This can reduce the possibility of welding through the tab while satisfying the current capacity of the tab.

In some embodiments, the third ratio parameter K3 is greater than or equal to 0.25. A value range of the third ratio parameter K3 is further limited. This can lower, to the maximum extent, the possibility of welding through the tab while satisfying the current capacity of the tab. Optionally, the third ratio parameter K3 is greater than or equal to 0.28. An optional range of the third ratio parameter K3 is further limited. This can effectively prevent the tab from being welded through while satisfying the current capacity of the tab.

With reference to the foregoing embodiment, in an experimental example, the thickness t1 of the tab was 0.01 mm, the thickness t2 of the welding region of the current collection plate 20 was 0.2 mm, and the radial distance d1 was 0.33 mm. When calculation was performed based on K3=0.25, the height h of the tab was approximately 1.65 mm; and when calculation was performed based on K3=0.28, the height h of the tab was approximately 1.8 mm. Therefore, when the actual height h is 7 mm, which is greater than 1.65 mm and 1.8 mm, corresponding K3 is greater than 0.28. In this case, it was observed that the tab set of each electrode assembly was not welded through after being flattened.

With reference to the foregoing embodiment, in another experimental example, the thickness t1 of the tab was 0.006 mm, the thickness t2 of the welding region of the current collection plate 20 was 0.4 mm, and the radial distance d1 was 0.33 mm. When calculation was performed based on K3=0.25, the height h of the tab was approximately 5.5 mm; and when calculation was performed based on K3=0.28, the height h of the tab was approximately 6.2 mm. Therefore, when the actual height h is 7 mm, which is greater than 5.5 mm and 6.2 mm, corresponding K3 is greater than 0.28. In this case, it was observed that the tab set of each electrode assembly was not welded through after being flattened.

With reference to the foregoing embodiment, in another experimental example, the thickness t1 of the tab was 0.015 mm, the thickness t2 of the welding region of the current collection plate 20 was 0.6 mm, and the radial distance d1 was 0.3 mm. When calculation was performed based on K3=0.25, the height h of the tab was approximately 3 mm; and when calculation was performed based on K3=0.28, the height h of the tab was approximately 3.4 mm. Therefore, when the actual height h is 5 mm, which is greater than 3 mm and 3.4 mm, corresponding K3 is greater than 0.28. In this case, it was observed that the tab set of each electrode assembly was not welded through after being flattened.

With reference to the foregoing embodiment, in a comparative experimental example, the thickness t1 of the tab was 0.006 mm, the thickness t2 of the welding region of the current collection plate 20 was 0.4 mm, and the radial distance d1 was 0.33 mm. When calculation was performed based on K3=0.25, the height h of the tab was approximately 5.5 mm; and when calculation was performed based on K3=0.28, the height h of the tab was approximately 6.2 mm. Therefore, when the actual height h is 5 mm, which is less than 5.5 mm and 6.2 mm, corresponding K3 is less than 0.25. In this case, it was observed that approximately 50% of tabs in the tab set of each electrode assembly were welded through after being flattened.

As can be seen from the foregoing experimental examples and comparative experimental examples that the possibility of tabs being welded through during tab flattening can be effectively reduced by selecting an appropriate height h for the tab, thereby preventing burning of the separator and increasing the product yield rate.

Referring to FIG. 6 and FIG. 7, in some embodiments, a distance S between a root portion of the tab and a side edge of the separator 10C that is adjacent to a side of the tab satisfies:

$$S=K5*t2;$$

where t2 is the thickness of the welding region of the current collection plate 20, and K5 is a fifth ratio parameter. The distance S herein may be a distance between the root portion of the positive electrode tab and the side edge of the separator 10C or a distance between the root portion of the negative electrode tab and the side edge of the separator 10C. Regarding an electrode assembly, for which tabs are formed on electrode plates through a die-cutting process, the root portion of the tab is a bottom of a groove between tabs formed during die-cutting.

The current collection plate is fixedly connected to the flattened tab through welding. The thickness of the current collection plate determines heat generated during welding. To avoid a risk of a short circuit caused by burning of the separator in the electrode assembly due to intensive heat, a distance needs to be reserved between the flattened tab and the separator. Generally, bending and flattening is performed on the root portions of tabs spaced apart. Therefore, the distance S between the root portion of the tab and the side edge of the separator is determined based on the thickness t2 of the welding region of the current collection plate. This can reduce the possibility of burning the separator during welding of the current collection plate, thereby reducing the risk of a short circuit caused by burning.

In some embodiments, the fifth ratio parameter K5 is greater than or equal to 1.5. A value range of the fifth ratio parameter K5 is limited. This lowers, to the maximum extent, the possibility of burning the separator during welding of the current collection plate, thereby reducing the risk of a short circuit caused by burning of the separator. Optionally, the fifth ratio parameter K5 is greater than or equal to 3. Further limiting an optional range of the fifth ratio parameter K5 can effectively prevent the separator from being burned during welding of the current collection plate.

With reference to the foregoing example, in an experimental example, the thickness t2 of the welding region of the current collection plate 20 was 0.4 mm. When calculation was performed based on K5 = 1.5, the distance S was 0.6 mm; and when calculation was performed based on K5 = 3, the distance S was 1.2 mm. Therefore, when the actual distance S is 1.5 mm, which is greater than 0.6 mm and 1.2 mm, corresponding K5 is greater than 3. In this case, no burn was observed on the separator of each electrode assembly after welding.

With reference to the foregoing example, in another experimental example, the thickness t2 of the welding region of the current collection plate 20 was 0.6 mm. When calculation was performed based on K5 = 1.5, the distance S was 0.9 mm; and when calculation was performed based on K5 = 3, the distance S was 1.8 mm. Therefore, when the actual distance S is 2 mm, which is greater than 0.9 mm and 1.8 mm, corresponding K5 is greater than 3. In this case, no burn was observed on the separator of each electrode assembly after welding.

With reference to the foregoing example, in a comparative experimental example, the thickness t2 of the welding region of the current collection plate 20 was 0.4 mm. When calculation was performed based on K5 = 1.5, the distance S was 0.6 mm; and when calculation was performed based on K5 = 3, the distance S was 1.2 mm. Therefore, when the actual distance S is 0.5 mm, which is less than 0.6 mm and 1.2 mm, corresponding K5 is less than 1.5. In this case, a burn was observed on the separator of each electrode assembly after welding.

As can be seen from the foregoing experimental examples and comparative experimental examples that the possibility of burning the separator during welding can be effectively reduced by selecting an appropriate distance S, reducing the risk of a short circuit.

Based on each embodiment of the electrode assembly in this disclosure, an embodiment of this disclosure further provides a battery cell, including the foregoing electrode assembly. The battery cell using the foregoing electrode assembly has superior performance, such as higher safety, lower internal resistance, and higher product yield rate.

According to an aspect of this disclosure, a battery is provided, including the foregoing battery cell. The battery using the foregoing battery cell has better performance such as higher safety, lower internal resistance, and a higher product yield rate.

According to an aspect of this disclosure, an electric device is provided, including the foregoing battery. The electric device using the foregoing battery has better performance, such as higher safety, lower internal resistance, and a higher product yield rate.

Although this disclosure has been described with reference to the preferred embodiments, various modifications can be made to this disclosure without departing from the scope of this application and the components therein can be replaced with equivalents. In particular, as long as there is no structural conflict, the various technical features mentioned in the embodiments can be combined in any manner. This disclosure is not limited to the specific embodiments disclosed in this specification, but includes all technical solutions falling within the scope of the claims.

**Claims**

1. An electrode assembly, **characterized by** comprising a first electrode plate (10A), a second electrode plate (10B), and a separator (10C) disposed between the first electrode plate (10A) and the second electrode plate (10B), wherein the first electrode plate (10A), the separator (10C), and the second electrode plate (10B) are wound in a winding direction (r) to form a wound structure (100), wherein at least one of the first electrode plate (10A) and the second electrode plate (10B) comprises:

   a current collector substrate (11A or 11B);
   an active substance layer (12A or 12B), disposed on at least one surface on a side, adjacent to the separator (10C), of the current collector substrate (11A or 11B); and
   a tab set (13A or 13B), connected to a side edge of the current collector substrate (11A or 11B) that extends in the winding direction (r), wherein the tab set (13A or 13B) comprises a plurality of tabs spaced apart in the winding direction (r).

2. The electrode assembly according to claim 1, **char-**

**acterized in that** a distance L from an initial coverage position of the active substance layer (12A or 12B) on the current collector substrate (11A or 11B) in the winding direction (r) to a first tab in the tab set (13A or 13B) in the winding direction (r) satisfies:

$$L = K1 \times \sqrt[3]{\frac{C \times p \times t}{W1 \times \rho}});$$

wherein C is a specific heat capacity of the current collector substrate (11A or 11B), p is a density of the current collector substrate (11A or 11B), t is a thickness of the current collector substrate (11A or 11B), W1 is a width of the current collector substrate (11A or 11B), $\rho$ is a resistivity of the current collector substrate (11A or 11B), and K1 is a first ratio parameter.

3. The electrode assembly according to any one of the foregoing claims, **characterized in that** the first ratio parameter K1 is less than or equal to

$$2000\text{mm}^{\frac{7}{3}} \cdot \left(\frac{°C \cdot \Omega}{J}\right)^{\frac{1}{3}}$$, the specific heat capacity C of the current collector substrate (11A or 11B) is measured in J/(g·°C), the density p of the current collector substrate (11A or 11B) is measured in g/mm³, the thickness t of the current collector substrate (11A or 11B) is measured in mm, the width W1 of the current collector substrate (11A or 11B) is measured in mm, and the resistivity $\rho$ of the current collector substrate (11A or 11B) is measured in $\Omega$·mm.

4. The electrode assembly according to any one of the foregoing claims, **characterized in that** the first ratio parameter K1 is less than or equal to

$$1600\text{mm}^{\frac{7}{3}} \cdot \left(\frac{°C \cdot \Omega}{J}\right)^{\frac{1}{3}}.$$

5. The electrode assembly according to any one of the foregoing claims, **characterized in that** the wound structure (100) is a cylindrical wound structure and a width W2 of the tab satisfies:

$$W2 = K2 * \pi * D1;$$

wherein D1 is a circumferential diameter of an electrode plate layer in the cylindrical wound structure that corresponds to the first tab in the tab set (13A or 13B) in the winding direction (r), and K2 is a second ratio parameter.

6. The electrode assembly according to any one of the foregoing claims, **characterized in that** the second ratio parameter K2 is less than or equal to 1/4.

7. The electrode assembly according to any one of the foregoing claims, **characterized in that** the second ratio parameter K2 is less than or equal to 1/6.

8. The electrode assembly according to any one of the foregoing claims, **characterized in that** the wound structure (100) is a cylindrical wound structure, and the electrode assembly further comprises:

a current collection plate (20), located on a side of the cylindrical wound structure connected to the tab set (13A or 13B), and fixedly connected to a flattened tab set (13A or 13B) through welding;
wherein a height h of the tab satisfies:

$$h = (K3 * (d1 * t2)) / t1;$$

wherein d1 is a radial distance between tabs respectively connected to electrode plates on adjacent layers in the cylindrical wound structure, t1 is a thickness of the tab, t2 is a thickness of a welding region of the current collection plate (20), and K3 is a third ratio parameter.

9. The electrode assembly according to any one of the foregoing claims, **characterized in that** the third ratio parameter K3 is greater than or equal to 0.25.

10. The electrode assembly according to any one of the foregoing claims, **characterized in that** the third ratio parameter K3 is greater than or equal to 0.28.

11. The electrode assembly according to any one of the foregoing claims, **characterized in that** the wound structure (100) is a cylindrical wound structure, and a distance d2 between top ends of adjacent tabs in the tab set (13A or 13B) satisfies:

$$d2 = (K4 * (W2 * h)) / (D0 - 2 * h);$$

wherein W2 is the width of the tab, h is the height of the tab, D0 is a circumferential diameter of the outermost electrode plate layer of the cylindrical wound structure, and K4 is a fourth ratio parameter.

12. The electrode assembly according to any one of the foregoing claims, **characterized in that** the fourth ratio parameter K4 is less than or equal to 4.

13. The electrode assembly according to any one of the foregoing claims, **characterized in that** the fourth ratio parameter K4 is less than or equal to 3.2.

**14.** The electrode assembly according to any one of the foregoing claims, **characterized by** further comprising

the current collection plate (20), located on a side of the wound structure (100) connected to the tab set (13A or 13B), and fixedly connected to the flattened tab set (13A or 13B) through welding;

wherein a distance S between a root portion of the tab and a side edge of the separator (10C) that is adjacent to a side of the tab satisfies:

$$S=K5*t2;$$

wherein t2 is the thickness of the welding region of the current collection plate (20), and K5 is a fifth ratio parameter.

**15.** The electrode assembly according to any one of the foregoing claims, **characterized in that** the fifth ratio parameter K5 is greater than or equal to 1.5.

**16.** The electrode assembly according to any one of the foregoing claims, **characterized in that** the fifth ratio parameter K5 is greater than or equal to 3.

**17.** The electrode assembly according to any one of the foregoing claims, **characterized in that** the first electrode plate (10A) and the second electrode plate (10B) both comprise the tab set (13A or 13B), and the tab set (13A or 13B) comprised in the first electrode plate (10A) and the tab set (13A or 13B) comprised in the second electrode plate (10B) are separately located at different ends of the wound structure (100) in a direction perpendicular to the winding direction (r).

**18.** A battery cell, **characterized by** comprising the electrode assembly according to any one of the foregoing claims.

**19.** A battery, **characterized by** comprising the battery cell according to any one of the foregoing claims.

**20.** An electric device, **characterized by** comprising the battery according to any one of the foregoing claims.

40

30

FIG. 1

30

32

31

10

FIG. 2A

FIG. 2B

FIG. 3

FIG. 4

FIG. 5

FIG. 6

FIG. 7

## INTERNATIONAL SEARCH REPORT

| International application No. |
|---|
| **PCT/CN2022/089731** |

**A. CLASSIFICATION OF SUBJECT MATTER**

H01M 50/533(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 电池, 未涂, 多个, 极耳, 宽度, 距离, 高度, 间距, battery, uncoat+, plurality, multi, tabs, width, distance, height, pitch

**C. DOCUMENTS CONSIDERED TO BE RELEVANT**

| Category* | Citation of document, with indication, where appropriate, of the relevant passages | Relevant to claim No. |
|---|---|---|
| X | CN 114122630 A (MICROVAST POWER SYSTEMS (HUZHOU) CO., LTD.) 01 March 2022 (2022-03-01)<br>description, paragraphs 54-93, and figures 1-14 | 1-2, 5, 8, 11, 14, 17-20 |
| X | CN 113270693 A (MICROVAST POWER SYSTEMS (HUZHOU) CO., LTD.) 17 August 2021 (2021-08-17)<br>description, paragraphs 36-62, and figures 1-14 | 1-2, 5, 8, 11, 14, 17-20 |
| X | CN 113193165 A (MICROVAST POWER SYSTEMS (HUZHOU) CO., LTD.) 30 July 2021 (2021-07-30)<br>description, paragraphs 37-63, and figures 1-14 | 1-2, 5, 8, 11, 14, 17-20 |
| X | JP 2014072145 A (SHIN-KOBE ELECTRIC MACHINERY CO., LTD.) 21 April 2014 (2014-04-21)<br>description, paragraphs 7-46, and figures 1-6 | 1-2, 5, 8, 11, 14, 17-20 |
| A | CN 216120650 U (NINGDE CONTEMPORARY AMPEREX TECHNOLOGY CO., LTD.) 22 March 2022 (2022-03-22)<br>entire document | 1-20 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 November 2022** | **30 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/089731**

| Patent document cited in search report | | | Publication date (day/month/year) | Patent family member(s) | Publication date (day/month/year) |
|---|---|---|---|---|---|
| CN | 114122630 | A | 01 March 2022 | None | |
| CN | 113270693 | A | 17 August 2021 | None | |
| CN | 113193165 | A | 30 July 2021 | None | |
| JP | 2014072145 | A | 21 April 2014 | None | |
| CN | 216120650 | U | 22 March 2022 | None | |

Form PCT/ISA/210 (patent family annex) (January 2015)